# EUROPÄISCHE PATENTSCHRIFT

(11) **EP 0 401 658 B1**
(45) Veröffentlichungstag und Bekanntmachung des Hinweises auf die Patenterteilung: **04.08.1993**
(21) Anmeldenummer: 90110242.6
(22) Anmeldetag: 30.05.1990
(51) Int. Cl.: G01N 27/00

(54) **Rastertunnelmikroskop mit Einrichtungen zur Erfassung von von der Probe herkommender Elektronen**
Scanning tunneling microscope with arrangements for detecting electrons coming from the sample
Microscope à effet tunnel muni de dispositifs pour détecter les électrons provenant d'un échantillon

(30) Priorität: 05.06.1989 DE 3918249
(43) Veröffentlichungstag der Anmeldung: 12.12.1990
(73) Patentinhaber: FORSCHUNGSZENTRUM JÜLICH GMBH, 52425 Jülich (DE)
(72) Erfinder: Frohn, Josef, D-5120 Herzogenrath (DE); Ibach, Harald, Prof. Dr., D-5100 Aachen-Verlautenheide (DE)

(56) Entgegenhaltungen:
- REVIEW OF SCIENTIFIC INSTRUMENTS Band 57, Nr. 2, Februar 1986, Seiten 221-224, Woodbury, NY, US; CH. GERBER et al.: "Scanning tunneling microscope combined with a scanning electron microscope"
- SOVIET PHYSICS TECHNICAL PHYSICS Band 28, Nr. 10, October 1983, Seiten 1262-1266, New York, US; T.V. KRACHINO et al.: "Auger electron energy analyzer using a cylindrical mirror with ring-to-axis focusing"
- JOURNAL OF VACUUM SCIENCE & TECHNOLOGY A Band 7, Nr. 311, Mai/Juni 1989, Seiten 1684-1688, New York, US; T. SAKURAI et al.: "Scanning tunneling microscope equipped with a field ion microscope"
- JOURNAL OF VACUUM SCIENCE & TECHNOLOGY, PART A Band 6, Nr. 2, März/April 1988, Seite 379, New York, US; R. EMCH et al.: "Summary Abstract: A scanning tunneling microscope combined with a scanning field emission microscope"
- TM - TECHNISCHES MESSEN Band 54, Nr. 9, 1987, Seiten 330-336, München, DE; H.J. DUDEK: "Mikroanalyse und Tiefenprofilanalyse mit der Auger-Elektronen-Spektrospkopie"

## Beschreibung

Die Erfindung bezieht sich auf ein Rastertunnelmikroskop mit einer Emissionsspitze, einer Probenhalterung zur Aufnahme von in geringem Abstand gegenüber der Spitze anzuordnenden Proben und einem Abtast-Bewegungsmechanismus für xyz-Bewegung zwischen Probe und Spitze sowie mit Einrichtungen zum Anlegen einer Spannung zwischen Spitze und Probe und zur Erfassung von von der Probe herkommenden Elektronen.

Zur tunnelmikroskopischen Abbildung einer Oberfläche wird in bekannter Weise eine sehr feine Spitze (die Tunnelspitze) in einen Abstand von weniger als 1 Nanometer vor die zu untersuchende Probe gebracht (G. Binnig et al, Phys. Rev. Lett. 49 (1982) S. 57). Durch Anlegen einer Spannung zwischen Probe und der Tunnelspitze fließt ein Tunnelstrom. Ein geeigneter Servomechanismus hält diesen Strom konstant, während die Spitze die Probe abrastert. Da der Tunnelstrom empfindlich vom Abstand der Tunnelspitze zur Oberfläche abhängt, liefert das Servosignal ein Bild der Struktur mit atomarer Auflösung.

Tunnelmikroskope sind in vielen Variationen bekannt geworden (P.K. Hansma et al, J. Appl. Phys. 61 (1987) R1, Y. Kuk et al, Rev. Sci. Instr. 60 (1989) 165). Die Interpretation tunnelmikroskopischer Bilder wird häufig dadurch erschwert, daß es bislang nicht möglich war, im gleichen Oberflächenbereich und mit vergleichbarer Ortsauflösung ausreichend spektroskopische Informationen über die Oberfläche zu erhalten. Eine gewisse Form der Spektroskopie, die vor allem bei Halbleitern eingesetzt werden kann, ermöglicht die Messung des Leitwertes der Tunnellücke zwischen Probe und Tunnelspitze als Funktion der angelegten Spannung. Diese Tunnelspektroskopie ist jedoch in ihren Einsatzmöglichkeiten dadurch beschränkt, daß die Spannung zwischen der Tunnelspitze und der Probe nur sehr gering gewählt werden kann, da bei zu großen Spannungen die Tunnelströme zu groß würden und Probe und/oder die Spitze zerstört würden.

Grundsätzlich besteht die Möglichkeit, die Spitze in einem größeren Abstand von der Oberfläche zu führen und dadurch den Tunnelstrom zu verkleinern und entsprechend die anlegbare Spannung zu vergrößern. Vergrößert man so schließlich den Abstand in einen Bereich, der größer als etwa 1 Nanometer ist, so findet der Tunnelprozeß schließlich nur noch unmittelbar vor der Emissionspitze selbst statt. Die freigesetzten Elektronen werden dann auf die Probe zu beschleunigt und können schließlich, wenn die Spannung zwischen Emissionsspitze und Probe genügend hoch ist in der Probe Sekundärelektronen auslösen. Der zuletzt beschriebene Prozeß wird üblicherweise als Feldemission bezeichnet. Der Übergang vom Tunnelbetrieb zum Feldemissionsbetrieb wurde von R. Young et al (Phys. Rev. Lett. 27 (1971) 922 und Rev. Sci. Instr. 43 (1972) 999) zuerst beschrieben, ebenso ein Mikroskop, welches, je nach Abstand zwischen Spitze und Probe, entweder als Feldemissionspitzenmikroskop oder als Tunnelmikroskop arbeitet.

Im übringen sind Feldemissionspitzen als Kathoden zur Elektronenstrahlerzeugung in Strahlerzeugungssystemen bekannt, wie sie z.B. in Elektronenmikroskopen eingesetzt werden (siehe hierzu Ludwig Reimer, "Scanning Electron Microscopy, Springer", 1985). Die notwendigen Strahlerzeugungs- und Führungssysteme sind sehr aufwendig und von großem Volumen. Es ist technisch bislang nicht realisiert worden, einen solchermaßen erzeugten Strahl reproduzierbar auf einen Oberflächenbereich zu richten, der vorher, nachher oder gleichzeitig tunnelmikroskopisch untersuchbar ist.

Ziel der Erfindung ist nun eine Vorrichtung, mit der einerseits Tunnelmikroskopie mit atomarer Ortsauflösung betrieben werden kann und andererseits der Nachweis von im gleichen Oberflächenbereich erzeugten Sekundärelektronen und/oder eine Energieanalyse der Sekundärelektronen und/oder eine Energieanalyse der von der Emissionsspitze emittierten und an der Oberfläche gestreuten Elektronen unter möglichst weitgehender Erhaltung der Ortsauflösung möglich ist.

Dieses Ziel wird erfindungsgemäß mit einem Rastertunnelmikroskop der eingangs genannten Art erreicht, das gekennzeichnet ist durch einen koaxial zur Spitze angeordneten Zylinderspiegelanalysator mit zugeordnetem Detektor für von der Probe herkommende Sekundärelektronen und/oder an der Probe elastisch oder inelastisch gestreute Elektronen bei Beaufschlagung der Probe mit einem unter Veränderung des Abstandes und/oder der Spannung zwischen Spitze und Probe von der Spitze emittierten Elektronenstrahl entsprechender Energie.

Weitere Besonderheiten der Erfindung gehen aus den abhängigen Ansprüchen hervor.

D.h., es wird ein neuartiges Instrument vorgeschlagen, das aus einer Kombination von Rastertunnelmikroskop mit integriertem Rastersekundärelektronenmikroskop, Rasterelektronenenergieverlustmikroskop und Rasterelektronenbeugungsmikroskop besteht.

Die Erzeugung eines geeigneten Strahles zur Anregung von Sekundärelektronen oder zur Streuung von Elektronen an Oberflächen erfolgt dabei zweckmäßigerweise in der von Young et al vorgeschlagenen Weise dadurch, daß die Tunnelspitze in einen Abstand von größer als 1 Nanometer vor die Probe gebracht wird, mit Vorteil unter Benutzung derselben Bewegungsvorrichtungen für Spitze und/oder Probe wie für die Tunnelmikroskopie. Der einzustellende Abstand von der Probe richtet sich dabei nach der gewünschten kinetischen Energie, mit der die Elektronen auf die Probe auftreffen sollen, und dem gewünschten bzw. zulässigen Strom, mit dem die Probe beaufschlagt werden soll.

Von besonderer Bedeutung im Zusammenhang mit der erfindungsgemäßen Anordnung ist die Qualität der Emissionsspitze, die vorzugsweise in situ zur Abdampfung von Verunreinigungen aufgeheizt, durch Sputtern (Gasbeschuß) geschärft und weiter gereinigt und ggf. durch Feldverdampfung eine weitere Qualitätssteigerung erfahren kann. Diese Manipulationen können wiederholt erfolgen.

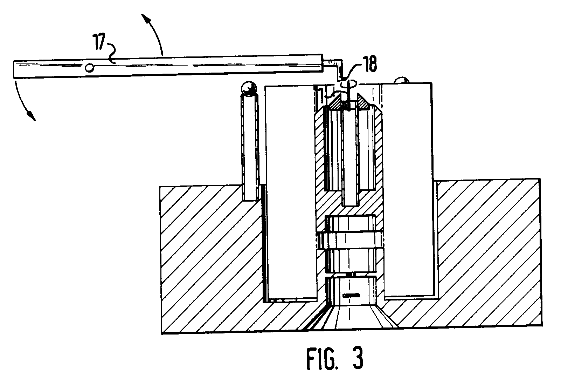

Besonders zweckmäßig ist für die vorzugsweise auf einem piezoelektrischen Aktuator auswechselbar montierte (geätzte) Spitze eine indirekte Spitzenbeheizung, etwa mittels einer aus ihrer Funktionsposition wieder entfernbaren Glühwendel, wie sie in Fig. 3 angedeutet ist: Die Spitze befindet sich gegenüber der beheizten Wendel auf einem hohen positiven Potential, und die Wendel wird für kurze Zeit mit einem Heizstrom von z.B. 1 - 2 Ampère beaufschlagt. Die durch Glühemission von der Wendel freigesetzten Elektronen treffen mit entsprechender Energie auf die Spitze, die dadurch auf hohe Temperaturen aufgeheizt wird.

Die Behandlung durch Sputtern erfolgt durch kurzzeitigen Gaseinlaß (z.B. Ne oder Ar) bei gegen Masse negativ geladener Spitze.

Eine Feldverdampfung kann sich der weiter unten angedeuteten Einrichtungen zur Feldionen- bzw. Feldelektronenmikroskopie bedienen.

Die erzielbare laterale Ortsauflösung der erfindungsgemäßen Vorrichtung richtet sich nach der lateralen Ausdehnung des von der Emissionsspitze erzeugten Strahles und ist im wesentlichen eine lineare Funktion des Spitzenabstandes von der Oberfläche und entspricht etwa der Größe des Abstandes. Besondere Spitzenpräparationen erlauben auch eine mehr gerichtete Emission von der Tunnelspitze, so daß in günstigen Fällen die laterale Ausdehnung des auf die Probe auftreffenden Strahles kleiner als 1/10 des Abstandes der Spitze von der Oberfläche werden kann.

Ein Verfahren dazu wurde zum Beispiel von H.W. Fink im IBM Journal of Research and Development Band 30, S. 460 (1986) angegeben. Ein unvermeidbarer Nachteil der beschriebenen Erzeugung eines feinfokussierten Strahles ist das starke elektrische Feld zwischen der Probe und der Emissionsspitze. Solche starken Felder am Probenort stehen im Gegensatz zu den Verhältnissen in konventionellen Rasterelektronenmikroskopen, Rasteraugerspektrometern oder Energieverlustmikroskopen: Während es bei einem konventionellen Rasterelektronenmikroskop z. B. möglich ist, die erzeugten Sekundärelektronen durch ein geringes elektrisches Feld abzusaugen und zum Nachweis zu führen, wie unter anderem in der Monographie von Reimer (s.o.) dargelegt wird, werben bei der erfindungsgemäßen Anordnung zur Strahlerzeugung in einem Tunnelmikroskop alle erzeugten Sekundärelektronen und/oder die gestreuten Elektronen (in besonderem Maße die mit geringer kinetischer Energie) durch das Feld zwischen Probe und Emissionspitze abgelenkt und sogar wieder auf die Probe zugeführt.

Erfindungsgemäß können dagegen auch bei Anwesenheit eines starken Feldes zwischen Emissionspitze und Probe aus der Probe ausgelöste Sekundärelektronen und/oder aus der Emissionsspitze emittierte und an der Probe elastisch oder inelastisch gestreute Elektronen effektiv bezüglich ihrer Energie analysiert und nachgewiesen werden.

Dies beruht darauf, daß nunmehr Probe und Emissionsspitze zu einem integralen Teil des Elektronenenergieanalysators und Nachweisdetektors gemacht werden. Wegen der durch Probe und Emissionsspitze gegebenen axialen Symmetrie mit der Symmetrieachse in Richtung der Senkrechten auf die Probenoberfläche geschieht die Energieanalyse mit Vorteil durch einen Elektronenenergieselektor, der dieselbe Symmetrie aufweist und als Zylinderspiegel bekannt ist. Eine solche Art von Analysator ist an sich aus der Monographie von G. Ertl und J. Küppers "Low Energy Electrons and Surface Chemistry", Verlag Chemie, 1985, insbesondere S. 22 bekannt: Danach besteht ein Zylinderspiegel aus zwei konzentrischen metallischen Zylindern, zwischen denen eine Spannung angelegt wird. Der innere Zylinder weist dabei geeignet gewählte mit Netzen abgeschirmte Öffnungen aus. Bei geeigneter Spannungsdifferenz zwischen innerem und äußerem Zylinder werden Elektronen, die von einem Punkt auf der Zylinderachse ausgehen, wieder auf einen Punkt auf der Zylinderachse fokussiert. Der bei der Abbildung erfaßte Raumwinkel beträgt dabei in azimutaler Richtung 360°, in radialer Richtung je nach gewünschter Energieauflösung zwischen 10° und 20°.

Zwar ist eine spezielle Art von Sekundärelektronenmikroskop, nämlich ein als Auger-Elektronenmikroskop unter Verwendung einer Feldemissionsspitze bezeichnetes Gerät aus der EP-PS 0 189 498bekannt, bei dem aber nur ein kleiner Teil des Raumwinkels erfaßt wird mit entsprechendem Nachteil für die Nachweiswahrscheinlichkeit für die Sekundärelektronen. Die spezifische Schwierigkeit, die sich durch das starke elektrische Feld zwischen Emissionsspitze und Probe ergibt und der störende Einfluß des Feldes auf die Elektronenbahnen der Sekundärelektronen werden in der Patentschrift zwar erwähnt, es werden aber keine Wege zur Lösung des Problems aufgezeigt. Ersichtlich ist das Feldproblem um so gravierender, je geringer die kinetische Energie der von der Probe emittierten oder rückgestreuten Elektronen im Vergleich zum Unterschied der potentiellen Energie zwischen Emissionsspitze und Probe ist.

Ein konventioneller Zylinderspiegel, wie oben skizziert, verlangt für seine Funktion einen elektronenoptisch einwandfreien Abschluß des Randfeldes an beiden Enden der zylindrischen Rohre sowie einen feldfreien Raum im Inneren des inneren Zylinders. Beides ist ersichtlich bei der erfindungsgemäßen Lösung nicht der Fall. Es wird daher insbesondere eine zylindersymmetrisch um die Emissionsspitze angeordnete Korrekturelektrode vorgesehen. Elektronenoptische Rechnungen zeigen, daß es bei geeigneter Formgebung der Korrekturelektrode (z.B. in konischer Ausführung, wie gezeigt) und geeignetem Potential an der Korrekturelektrode möglich ist, an der Probe ausgelöste Sekundärelektronen oder von der Probe gestreute Elektronen trotz des starken elektrischen Feldes zwischen Emissionsspitze und Probe dergestalt zu beeinflussen, daß der modifizierte Zylinderspiegelanalysator in seinen Abbildungseigenschaften einem konventionellen Zylinderspiegel vergleichbar wird. Die Korrekturelektrode erlaubt ferner die Verwendung der Equipotentialfläche der Probe als Abschluß des Zylinderspiegels, da die dadurch bewirkte Veränderung des Randfeldes im Zylinderspiegel ebenfalls durch die Korrekturelektrode kompensiert werden kann. Die an die Korrekturelektrode anzulegende Spannung richtet sich dabei nach der Spannung zwischen Emissionsspitze und Probe einerseits und der gewählten Durchlaßenergie für den Zylinderspiegel andererseits. Sie wird naturgemäß auch von der Formgebung der Korrekturelektrode beeinflußt. Je kleiner die kinetische Energie der (von der Probe herkommenden) nachzuweisenden Elektronen im Verhältnis zur Energie des primären Elektronenstrahls ist, umso höher wird die an die Korrekturelektrode anzulegende Spannung.

Erfindungsgemäß kann die Probe auch bei geringen Spannungen zwischen Probe und Tunnelspitze mit hohen Strömen beaufschlagt werden. Weiterhin gestattet der Zylinderspiegel als Energieanalysator mit seinem nachgeschalteten Elektronendetektor auch die Energieanalyse der von der Tunnelspitze emittierten und von der Probe inelastisch oder elastisch gestreuten Elektronen. Dadurch kann die Probe auch unter Verwendung charakteristischer Energieverluste oder der elastischen Elektronenstreuung zur Herstellung des Bildkontrastes mikroskopiert werden. Die rastermikroskopische Abbildung von Oberflächen im Lichte elastischer Elektronen ist auch als Raster-LEED bekannt und wurde z.B. von Kirschner et al in "Scanning Electron Microscopy" (1986) II S. 331 beschrieben. Diese Technik kann bekanntlich dazu verwendet werden, Oberflächenordnungszustände abzubilden. Charakteristische Energieverluste von Elektronen ergeben sich andererseits durch Anregungen von Oberflächenschwingungen oder durch elektronische Verluste (siehe dazu H. Ibach, D.L. Mills, "Electron Energy Loss Spectroscopy and Surface Vibrations", Academic Press 1982) . Die beschriebene Vorrichtung erlaubt daher auch die mikroskopische Abbildung von Oberflächen im Lichte der örtlichen Verteilung bestimmter schwingungsmäßiger und/oder elektronischer Anregungen. Wegen der in diesem Fall geringen erforderlichen Spannung zwischen Probe und Emissionsspitze von 1 - 10 V kann auch der Abstand der Spitze von der Probe klein gewählt werden (z.B. 1 - 10 nm). Die Probe wird dann nur in einem kleinen Bereich mit Elektronen bestrahlt mit Vorteil für die Auflösung der vorbeschriebenen Mikroskopie. Besonders hohe Energieauflösung wird in dieser Anwendung dann erzielt, wenn die Emissionsspitze gekühlt wird, vorzugsweise mit flüssigem Stickstoff oder flüssigem Helium.

Der erfindungsgemäß verwendete Zylinderspiegelanalysator mit Korrekturelektrode erlaubt auch die Abbildung von Sekundärelektronen niederer kinetischer Energie, auch dann, wenn die kinetische Energie der anregenden Elektronen groß ist. Da der Bezugspunkt der kinetischen Energie der Sekundärelektronen das jeweils lokale Potential der Probe ist, läßt das hier angegebene Mikroskop sich auch zur Abbildung des Potentialkontrastes verwenden. Ein solcher Potentialkontrast entsteht zum Beispiel durch eine lokal verschiedene Austrittsarbeit für Elektronen bei inhomogenen Proben oder bei Halbleiterbauelementen, die mit elektrischen Spannungen versorgt sind. Die bereits erwähnte Monographie von Reimer beschreibt auf S. 265 ff dieses Abbildungsverfahren.

Vorstehend wird die Nutzung des Tunnelstromes und die Nutzung der in der Probe gestreuten oder emittierten Elektronen für die Erzeugung des mikroskopischen Bildkontrastes beschrieben. Es ist jedoch ohne weiteres möglich, die beschriebene Vorrichtung dahingehend zu erweitern, daß auch durch Elektronenstoß erzeugte, von der Probe emittierte Photonen für den Bildkontrast verwendet werden. Je nachdem, ob die emittierten Photonen als Endprodukt einer Abregungskaskade in der Probe oder in einem direkten Umwandlungsprozeß der kinetischen Energie der auf die Probe auftreffenden Elektronen in Photonenenergie entstehen, spricht man von Kathodolumineszenz oder inversem Photoeffekt. Zum Nachweis der Photonen wird man zweckmäßigerweise den äußeren Zylinder des Zylinderspiegelanalysators als partiell lichtdurchlässiges Netz oder aber als leitende, transparente Schicht (z.B. eine SnO₂-Schicht) auf einem transparenten Rohr ausbilden. Nach dem dadurch erzielten weitgehend ungehinderten Durchtritt der Photonen durch den äußeren Zylinder können diese durch einen zweckmäßigerweise ringförmig um den Zylinder gelegten üblichen Halbleiter-Photonendetektor nachgewiesen werden.

Die mikroskopische Abbildung in allen beschriebenen Anwendungen gemäß dem Rasterprinzip erfordert eine Einrichtung zur Bewegung der Emissionspitze über die Probenoberfläche, sowie eine Vorrichtung zur Einstellung des Abstandes zwischen Probe und Emissionsspitze. Dies kann besonders vorteilhaft durch Verwendung solcher piezoelektrischen Aktuatoren geschehen, wie sie in der DE-PS 36 10 540 beschrieben sind. Für eine Grobeinstellung des Abstandes der Emissionsspitze von der Oberfläche kann die Probe in einem Ring befestigt werden, der drei radial um die Emissionsspitze angeordnete schiefe Ebenen aufweist. Im Zusammenwirken mit dem in der DE-PS beschriebenen Mikromanipulator erlaubt dieser Ring eine Grobeinstellung des Abstandes (DE-Patentanmeldung P 38 22 504.2-15).

Für eine raumwinkelabhängige Erfassung der Streu- und /oder Sekundäreelektronen kann durch entsprechende Ausblendmittel gesorgt werden.

Nachfolgend wird die Erfindung anhand von Ausführungsbeispielen unter Bezugnahme auf die angefügten Zeichnungen erläutert; es zeigen schematisch:
- Figur 1: den grundsätzlichen Aufbau eines erfindungsgemäßen Geräts;
- Figur 2: Teile desselben mit Abwandlungen zur Photonenerfassung und zur Beobachtung der Emissionspitze selbst;
- Figur 3: eine entfernbare Anordnung zur indirekten Beheizung der Spitze.

Die Emissionsspitze 1 ist auf einem piezoelektrischen Aktuator 2 befestigt, der durch Anlegen einer Spannung wenigstens die Einstellung des Abstandes zwischen der Emissionsspitze 1 und der Probe 3 erlaubt. Die Emissionsspitze 1 kann z.B. aus einem Wolframeinkristall mit (111)-Orientierung bestehen. Die Probe ruht in dem Ausführungsbeispiel in einem Probenträger 4, der wiederum auf einem Mikromanipulator ruht, der aus drei im Winkel von 120° konzentrisch um die Emissionsspitze angeordneten piezoelektrischen Aktuatoren 5 besteht. Diese erlauben entsprechend der DE-PS 36 10 540 eine Bewegung der Probe in allen drei Raumrichtungen.

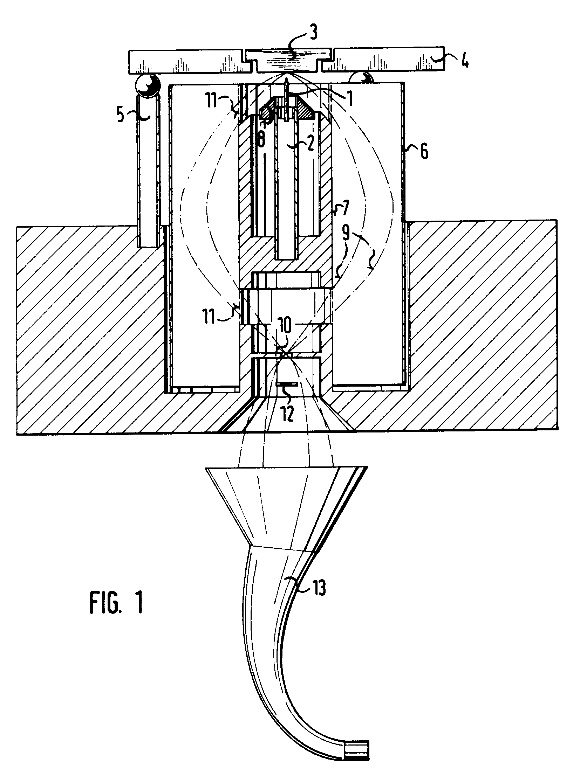

Der zur Energieanalyse der von der Probe gestreuten bzw. von der Probe emittierten Elektronen verwendete Zylinderspiegelanalysator besteht aus einem äußeren Zylinder 6, einem inneren Zylinder 7 und umfaßt eine Korrekturelektrode 8. Die Elektronen folgen in etwa den in Figur 1 strichpunktiert gezeichneten Bahnen 9, wenn die Spannung zwischen innerem und äußerem Zylinder sowie die Spannung an der Korrekturelektrode geeignet gewählt wird.

Eine Energieanalyse der Elektronen ergibt sich in der dem Fachmann bekannten Weise dadurch, daß Elektronen mit anderer kinetischer Energie andere Bahnen verfolgen, die nicht durch die Austrittsblende 10 führen. Wie in konventionellen Zylinderspiegeln ist der innere Zylinder teilweise als metallisches Netz 11 ausgeführt, um den Elektronen den Durchtritt zu ermöglichen. Es hat sich als zweckmäßig erwiesen, die Elektronen nach Durchtritt durch die Austrittsblende 10 durch eine weitere mit geeignet gewählter Spannung beaufschlagter Elektrode 12 auf den Eingang des Elektronendetektors 13 zu fokussieren. Durch Kombination des Gitters 11 bzw. der Empfangsfläche des Detektors 13 mit entsprechenden Ausblendmitteln ist eine winkelabhängige Erfassung der Streu- und Sekundärelektronen möglich.

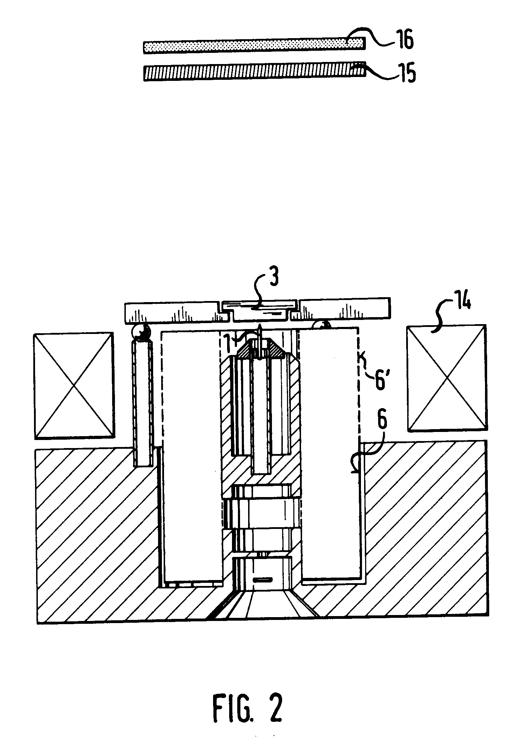

Bei dem in Figur 2 skizzierten Ausführungsbeispiel ist ein Photonendetektor 14 vorgesehen. Der äußere Zylinder 6 umfaßt in diesem Fall ein metallisches Netz 6' , so daß ein weitgehend ungehinderter Durchtritt der Photonen, die durch die Beaufschlagung der Probe 3 mit dem Strom aus der Emissionsspitze 1 erzeugt werden, möglich ist. Figur 2 zeigt ferner eine zusätzliche Kanalvervielfacherplatte 15 mit einem Leuchtschirm 16. Nach Entfernung der Probe durch einen Manipulator erlaubt die Kanalvervielfacherplatte mit Netz und Leuchtschirm eine feldelektronenmikroskopische oder feldionenmikroskopische Abbildung der Spitze in der dem Fachmann bekannten Weise, wie sie z.B. in D.P. Woodruff und T.A. Delchew "Modern Techniques of Surface Science", Cambridge University Press. 1986, beschrieben sind. Dadurch ist eine Kontrolle des Zustandes der Spitze möglich, ebenso eine kontrollierte Formgebung in atomaren Dimensionen durch Feldverdampfung und/oder Ionenbeschuß, gemäß der vorerwähnten Arbeit von H.W. Fink.

Figur 3 zeigt eine Glühwendel 18, die mittels eines Stromversorgungseinrichtungen aufweisenden Schwenkarmes 17 (bei entfernter Probenhalterung und Probe) in Position gebracht werden kann.

## Patentansprüche

1. Rastertunnelmikroskop mit einer Emissionsspitze (1), einer Probenhalterung (4) zur Aufnahme von in geringem Abstand gegenüber der Spitze anzuordnenden Proben (3) und einem Abtast-Bewegungsmechanismus (5) für xyz-Bewegung zwischen Probe und Spitze sowie mit Einrichtungen zum Anlegen einer Spannung zwischen Spitze und Probe und zur Erfassung von von der Probe herkommenden Elektronen,
**gekennzeichnet durch**
einen koaxial zur Spitze angeordneten Zylinderspiegelanalysator (6, 7) mit zugeordnetem Detektor (13) für von der Probe herkommende Sekundärelektronen und/oder an der Probe elastisch oder inelastisch gestreute Elektronen bei Beaufschlagung der Probe mit einem unter Veränderung des Abstandes und/oder der Spannung zwischen Spitze und Probe von der Spitze emittierten Elektronenstrahl entsprechender Energie.

2. Mikroskop nach Anspruch 1,
**dadurch gekennzeichnet,**
daß der Zylinderspiegelanalysator (6, 7) zur Probe (3) oder dem Probenhalter (4) hin offen ist.

3. Mikroskop nach Anspruch 1 oder 2,
**gekennzeichnet durch**
eine auf ein frei wählbares Potential zu bringende, koaxial zur Emissionsspitze angeordnete, zylindersymmetrische Korrekturelektrode (8) zwischen Spitze (1) und Zylinderspiegel (6, 7) bzw. innerhalb desselben.

4. Mikroskop nach einem der Ansprüche 1 bis 3,
**gekennzeichnet durch**
drei piezoelektrische Aktuatoren zur xyz-Bewegung der Probe durch Anlegen geeigneter Spannungen.

5. Mikroskop nach einem der Ansprüche 1 bis 4,
**gekennzeichnet durch**
einen piezoelektrischen Aktuator zur Bewegung der Emissionsspitze senkrecht zur Probe.

6. Mikroskop nach einem der Ansprüche 1 bis 5,
**gekennzeichnet durch**
Einrichtungen zur Heizung der Emissionsspitze.

7. Mikroskop nach einem der Ansprüche 1 bis 6,
**gekennzeichnet durch**
Einrichtungen zur Kühlung der Emissionsspitze.

8. Mikroskop nach einem der Ansprüche 1 bis 7,
**dadurch gekennzeichnet,**
daß der äußere Zylinder (6) des Zylinderspiegels (6, 7) zumindest teilweise aus einem metallischen Netz oder aus einem leitenden, lichtdurchlässigen Material (6') besteht und daß außerhalb des äußeren Zylinders (6) ein Photonendetektor (14) angeordnet ist.

9. Mikroskop nach einem der Ansprüche 1 bis 8,
**gekennzeichnet durch**
Ausblendmittel (10 - 12) für eine raumwinkelorientierte Erfassung der Streu- und Sekundärelektronen.

10. Mikroskop nach einem der Ansprüche 1 bis 9,
**gekennzeichnet durch**
zusätzliche Kanalvervielfacherplatte mit Netz und Leuchtschirm (15, 16) für feldionen- bzw. feldelektronenmikroskopische Untersuchung und/oder Manipulation der Emissionsspitze.

## Claims

1. Scanning tunnel microscope comprising an emission tip (1), a specimen mount (4) for receiving specimens (3) to be arranged a small distance opposite the tip, and a scanning movement mechanism (5) for xyz movement between the specimen and the tip, and also comprising devices for applying a voltage between the tip and the specimen and for detecting electrons originating from the specimen, characterised by a cylindrical reflector analyser (6, 7) arranged coaxially with the tip and having an associated detector (13) for secondary electrons originating from the specimen and/or electrons elastically or inelastically scattered at the specimen when an electron beam of corresponding energy emitted by the tip is fired at the specimen as the distance and/or voltage between the tip and the specimen is altered.

2. Miscroscope according to claim 1,
characterised in that the cylindrical reflector analyser (6, 7) is open towards the specimen (3) or the specimen mount (4).

3. Microscope according to claim 1 or 2,
characterised by a cylindrical symmetrical compensating electrode (8) which is to be brought to a freely selectable potential and is arranged coaxially with the emission tip between the tip (1) and the cylindrical reflector (6, 7) or else inside the latter.

4. Microscope according to one of claims 1 to 3,
characterised by three piezoelectric actuators for xyz movement of the specimen by the application of suitable voltages.

5. Microscope according to one of claims 1 to 4,
characterised by a piezoelectric actuator for moving the emission tip perpendicular to the specimen.

6. Microscope according to one of claims 1 to 5,
characterised by devices for heating the emission tip.

7. Microscope according to one of claims 1 to 6, characterised by devices for cooling the emission tip.

8. Microscope according to one of claims 1 to 7,
characterised in that the outer cylinder (6) of the cylindrical reflector (6, 7) consists at least partially of a metal grid or of a conductive, transparent material (6') and that a photon detector (14) is arranged outside the outer cylinder (6).

9. Microscope according to one of claims 1 to 8,
characterised by shielding means (10 - 12) for solid-angle-orientated detection of the scattered and secondary electrons.

10. Microscope according to one of claims 1 to 9,
characterised by an additional channel multiplier plate with power system and fluorescent screen (15, 16) for field ion or field electron microscopic examination and/or manipulation of the emission tip.

## Revendications

1. Microscope à balayage à effet tunnel, avec une pointe d'émission (1), un porte-échantillon (4) pour recevoir des échantillons (3) à disposer à faible distance en vis-à-vis de la pointe, et un mécanisme de mouvement de balayage (5) pour le déplacement xyz entre l'échantillon et la pointe, ainsi qu'avec des dispositifs pour appliquer une tension électrique entre la pointe et l'échantillon et pour enregistrer des électrons provenant de l'échantillon,
**caractérisé** par un analyseur à réflecteur cylindrique (6, 7), disposé coaxialement à la pointe et auquel est associé un détecteur (13) pour les électrons secondaires provenant de l'échantillon et/ou pour les électrons dispersés de manière élastique ou inélastique sur l'échantillon, lors de la sollicitation de l'échantillon avec un faisceau électronique d'énergie correspondante, émis par la pointe en modifiant la distance et/ou la tension électrique entre la pointe et l'échantillon.

2. Microscope selon la revendication 1, **caractérisé** en ce que l'analyseur à réflecteur cylindrique (6, 7) est ouvert vers l'échantillon (3) ou le porte-échantillon (4).

3. Microscope selon la revendication 1 ou 2, **caractérisé** par une électrode de correction cylindrosymétrique (8) entre la pointe (1) et le réflecteur cylindrique (6, 7), ou à l'intérieur de ce dernier, disposée coaxialement à la pointe d'émission et à amener à un potentiel pouvant être librement choisi.

4. Microscope selon l'une quelconque des revendications 1 à 3, **caractérisé** par trois actionneurs piézoélectriques, pour le déplacement xyz de l'échantillon en appliquant des tensions électriques appropriées.

5. Microscope selon l'une quelconque des revendications 1 à 4, **caractérisé** par un actionneur piézoélectrique pour le déplacement de la pointe d'émission perpendiculairement à l'échantillon.

6. Microscope selon l'une quelconque des revendications 1 à 5, **caractérisé** par des dispositifs pour chauffer la pointe d'émission.

7. Microscope selon l'une quelconque des revendications 1 à 6, **caractérisé** par des dispositifs pour refroidir la pointe d'émission.

8. Microscope selon l'une quelconque des revendications 1 à 7, **caractérisé** en ce que le cylindre extérieur (6) du réflecteur cylindrique (6, 7) est constitué au moins en partie d'un treillis métallique ou d'un matériau conducteur (6') laissant passer la lumière, et en ce qu'un détecteur de photons (14) est disposé en dehors du cylindre extérieur (6).

9. Microscope selon l'une quelconque des revendications 1 à 8, **caractérisé** par des moyens d'obturation (10 - 12) pour un enregistrement des électrons dispersés et secondaires orienté d'après l'angle solide.

10. Microscope selon l'une quelconque des revendications 1 à 9, **caractérisé** par une plaque supplémentaire multiplicatrice de canaux avec réseau et écran luminescent (15, 16), pour l'analyse microscopique à émission de champ d'ions ou d'électrons et/ou pour la manipulation de la pointe d'émission.
